# EUROPÄISCHE PATENTSCHRIFT

(11) **EP 4 185 450 B1**
(45) Veröffentlichungstag und Bekanntmachung des Hinweises auf die Patenterteilung: **26.06.2024**
(21) Anmeldenummer: 21727093.3
(22) Anmeldetag: 12.05.2021
(51) Int. Cl.: B29C 64/118, B29C 31/10, B29C 64/209, B29C 64/393, B33Y 10/00, B33Y 30/00

(54) **3D DRUCKVORRICHTUNG**
3D PRINTER
DISPOSITIF D'IMPRESSION 3D

(30) Priorität: 22.07.2020 DE 102020119354
(43) Veröffentlichungstag der Anmeldung: 31.05.2023
(73) Patentinhaber: KraussMaffei Technologies GmbH, 85599 Parsdorf (DE)
(72) Erfinder: ZWIESELE, Jochen, 80997 München (DE)
(74) Vertreter: Wilhelm, Ludwig
(86) Internationale Anmeldenummer: PCT/EP2021/062576
(87) Internationale Veröffentlichungsnummer: WO 2022/017659

(56) Entgegenhaltungen:
- CN-A- 108 859 102
- CN-U- 210 309 071

## Beschreibung

Die Erfindung betrifft eine Druckvorrichtung, insbesondere 3D-Druckvorrichtung, wie 3D-Drucker, mit einer Extrusionsvorrichtung zum Aufschmelzen eines Materials, wie Kunststoffmaterial, und mit einem 3D-Druckkopf zum Auftragen des von der Extrusionsvorrichtung aufgeschmolzenen Materials, wie Kunststoffmaterial, auf eine Fläche, wie Arbeitsfläche, mit einem Gehäuse und einer an dem Gehäuse angeordneten Austragsdüse.

3D-Drucker umfassen üblicherweise einen Druckkopf, in dem ein Ausgangsmaterial druckfertig aufbereitet wird. Zur Erzeugung einer Relativbewegung zwischen dem Druckkopf und der Arbeitsfläche, auf der das Objekt bzw. Bauteil entstehen soll, sind Mittel bzw. Kinematiken, wie etwa 3-Achssysteme oder Robotereinrichtungen, vorgesehen. Dabei können entweder nur der Druckkopf, nur die Arbeitsfläche oder sowohl der Druckkopf als auch die Arbeitsfläche bewegt werden.

Das verbreitetes Verfahren ist das "Fused Deposition Modeling" (FDM), bei dem ein Filament aus dem Ausgangsmaterial in einer Düse aufgeschmolzen und schichtweise auf eine Arbeitsfläche aufgebracht wird. Dabei kommen üblicherweise Filamente mit konstantem Durchmesser, z.B. 1,76 mm, zum Einsatz. Das Filament wird durch eine beheizte Düse mit konstantem Durchmesser, z.B. 0,4 mm, gedrückt. Über eine geregelte Vorschubgeschwindigkeit des Filaments kann ein Austrag eines Schmelzestroms definiert werden. Meistens wird der Druckkopf auf einem in drei Achsen fahrbaren Aufbau gezielt bewegt, um durch eine definierte Ablage des Schmelzestroms das gedruckte Bauteil herzustellen. Im Gegensatz zu anderen Verfahren entstehen hier Bauteile freigeformt und sind nicht von unverfestigtem Material umgeben.

Beispielsweise offenbart die US 5,121,329 A ein solches "Fused Deposition Modeling" Verfahren, bei dem ein thermoplastischer Kunststoffdraht durch eine beheizte Düse gepresst wird und durch Bewegen der Arbeitsfläche und/oder der Düse die einzelnen Schichten des Bauteils auf der Arbeitsfläche abbildet. Die zweite und alle weiteren Schichten werden dabei jeweils auf die darunter liegende Struktur gedruckt.

Jedoch ist aufgrund des Aufschmelzverhaltens der Kunststoffe diese Methode nicht für hohe Durchmesser skalierbar und eignet sich damit nicht für große bzw. großvolumige Bauteile.

Für große Bauteile werden beispielsweise Extruder an Industrieroboter befestigt und über die Arbeitsfläche geführt, um das Bauteil zu drucken. Die DE 10 2014 018 081 A1 offenbart beispielsweise eine Anlage zur additiven Fertigung, mit einer an einer dreidimensional verfahrbaren Kinematik angeordneten Extrudervorrichtung, die zum Ablegen des extrudierten Materialfadens über eine Bauplattform bewegt wird.

Nachteilig ist hier, dass der Extruder und somit große Massen bzw. Gewichte bewegt werden müssen. Da die Förderrate bei Extrudern vom Gegendruck abhängt, kann bei einem System ohne wesentlichen Gegendruck oder durch den Einfluss des Düsendurchmessers kein genauer Schmelzeaustrag gewährleistet werden. Ebenso kann keine schnelle Regelung des Durchsatzes über die Extruderdrehzahl erfolgen. Es ist somit nicht möglich größere Volumenströme bei stabiler Schmelzequalität auszutragen und eine hohe Druckgenauigkeit bei einer flexiblen Schmelzestromsteuerung zu gewährleisten. Das Dokument CN 210 309 071 U offenbart die Präambel des Anspruchs 1.

Der Erfindung liegt die Aufgabe zugrunde, eine eingangs genannte Druckvorrichtung strukturell und/oder funktionell zu verbessern, wie sie im Anspruch 1 offenbart ist.

Daher ist es eine Aufgabe der vorliegenden Erfindung, eine Druckvorrichtung bereitzustellen, welche die im Zusammenhang mit dem Stand der Technik aufgezeigten Probleme reduziert bzw. beseitigt.

Die Aufgabe wird gelöst mit einer Druckvorrichtung, insbesondere 3D-Druckvorrichtung, wie 3D-Drucker, mit den Merkmalen des Anspruchs 1. Vorteilhafte Ausführungen und/oder Weiterbildungen sind Gegenstand der Unteransprüche.

Die Druckvorrichtung weist eine Extrusionsvorrichtung zum Aufschmelzen eines Materials, wie Kunststoffmaterial, und einen 3D-Druckkopf zum Auftragen des von der Extrusionsvorrichtung aufgeschmolzenen Materials auf eine Fläche auf. Der 3D-Druckkopf weist ein Gehäuse und eine an dem Gehäuse angeordnete Austragsdüse auf. Die Vorrichtung zum Auftragen eines aufgeschmolzenen Materials kann für einen 3D-Drucker oder eine Anlage zur additiven Fertigung sein oder darin angeordnet sein. Das Material kann ein Kunststoffmaterial sein. Die Fläche kann eine Arbeitsfläche oder Bauplattform sein. Die Fläche kann im Wesentlichen horizontal angeordnet sein. Die Fläche kann Teil des 3D-Druckers oder der Anlage zur additiven Fertigung sein.

Der 3D-Druckkopf weist eine Dosiereinrichtung auf. Die Dosiereinrichtung weist eine erste Dosiereinheit und eine zweite Dosiereinheit auf. Die erste Dosiereinheit und die zweite Dosiereinheit sind jeweils zum Aufnehmen und/oder dosierten Abgeben des aufgeschmolzenen Materials ausgebildet. Die Dosiereinrichtung ist ausgebildet, das aufgeschmolzene Material abwechselnd oder im fliegenden Wechsel durch die erste Dosiereinheit und die zweite Dosiereinheit einem Auslasskanal der Austragsdüse zuzuführen. Während also eine Förderung bzw. Zuführung des aufgeschmolzenen Materials aus der einen Dosiereinheit, zu der Austragsdüse bzw. dessen Auslasskanal, erfolgt, wird die andere Dosiereinheit selbst mit aufgeschmolzenem Material befüllt. Sobald das aufgeschmolzene Material aus der einen Dosiereinheit vollständig oder im Wesentlichen vollständig der Austragsdüse bzw. dessen Auslasskanal zugeführt wurde, kann umgeschaltet werden, so dass mit der zuvor befüllten anderen Dosiereinheit eine Förderung bzw. Zuführung des aufgeschmolzenen Materials aus dieser Dosiereinheit, insbesondere zu der Austragsdüse bzw. dessen Auslasskanal, erfolgt und die geleerte eine Dosiereinheit wieder mit aufgeschmolzenem Material befüllt wird.

Die Dosiereinheiten können räumlich kompakt ausgestaltet sein, was einerseits eine flexible Positionierung der Dosiereinheiten erlaubt und andererseits verhindert, dass eine größere Menge des aufgeschmolzenen Material über einen längeren Zeitraum in einer der Dosiereinheiten verbleibt, was zu einer Verschlechterung der Qualität des aufgeschmolzenen Materials führen könnte.

Die Druckvorrichtung kann einen ersten Betriebszustand aufweisen, in dem flüssiges oder aufgeschmolzenes Material aus dem 3D-Druckkopf der Druckvorrichtung, insbesondere aus der Austragsdüse des 3D-Druckkopfs, austritt. Die Druckvorrichtung kann einen zweiten Betriebszustand aufweisen, in dem kein flüssiges oder aufgeschmolzenes Material aus dem 3D-Druckkopf der Druckvorrichtung, insbesondere aus der Austragsdüse des 3D-Druckkopfs, austritt. Beispielsweise kann der zweite Betriebszustand dann eingenommen werden, wenn eine andere Position auf der Fläche angefahren werden soll und auf dem Weg dorthin kein Material abgelegt oder deponiert werden soll. Zwischen den beiden Betriebszuständen kann umgeschaltet werden. Hierzu kann eine Steuereinrichtung vorgesehen sein. Beispielsweise kann der Vortrieb des Materials ein- bzw. ausgeschalten oder freigeben bzw. unterbrochen werden.

Der 3D-Druckkopf und/oder die Austragsdüse kann einen Einlasskanal zum Einleiten des durch die Extrusionsvorrichtung, aufgeschmolzenen Materials aufweisen. Der Einlasskanal kann zum Anschluss an einen Auslass der Extrusionsvorrichtung und/oder an einen Auslass eines Schlauchelements ausgebildet sein.

Die Dosiereinrichtung kann ein Ventil aufweisen. Das Ventil kann ein Umschaltventil sein. Die Dosiereinrichtung kann zwei oder mehr Ventile aufweisen. Das Ventil kann zum Umschalten zwischen der ersten Dosiereinheit und der zweiten Dosiereinheit dienen. Das Ventil kann dazu ausgebildet sein, zwischen einer ersten Position und einer zweiten Position umzuschalten bzw. in die erste Position und die zweite Position geschalten zu werden. Das Ventil kann abwechselnd zwischen zwei Positionen hin- und hergeschalten werden. Die Positionen können auch Betriebszustände, insbesondere des Ventils oder der Dosiereinrichtung, sein oder diese definieren. Die Vorrichtung oder die Dosiereinrichtung kann eine Steuereinrichtung zum Steuern des Ventils aufweisen. Die Steuereinrichtung kann dazu ausgebildet sein, das Ventil abwechselnd in die erste Position und in die zweite Position zu schalten. Das Ventil ist so ausgebildet, dass das aufgeschmolzene Material einer Dosiereinheit zugeführt werden kann und gleichzeitig die andere Dosiereinheit aufgeschmolzenes Material abgeben kann.

Das Ventil kann dazu ausgebildet sein, in der ersten Position einen Eintritt des aufgeschmolzenen Materials in die erste Dosiereinheit zu ermöglichen. Das Ventil kann dazu ausgebildet sein, in der ersten Position einen Eintritt des aufgeschmolzenen Materials in die zweite Dosiereinheit zu verhindern. Das Ventil kann dazu ausgebildet sein, eine Befüllung der ersten bzw. zweiten Dosiereinheit mit aufgeschmolzenem Material zu ermöglichen und/oder zu verhindern.

Das Ventil kann dazu ausgebildet sein, in der zweiten Position einen Eintritt des aufgeschmolzenen Materials in die zweite Dosiereinheit zu ermöglichen. Das Ventil kann dazu ausgebildet sein, in der zweiten Position einen Eintritt des aufgeschmolzenen Materials in die erste Dosiereinheit zu verhindern.

Das Ventil kann dazu ausgebildet sein, in der ersten Position ein dosiertes Zuführen des aufgeschmolzenen Materials durch die zweite Dosiereinheit zu der Austragsdüse zu ermöglichen. Das Ventil kann dazu ausgebildet sein, in der ersten Position ein Zuführen, insbesondere dosiertes Zuführen, des aufgeschmolzenen Materials durch die erste Dosiereinheit zu der Austragsdüse zu verhindern. Das Ventil kann dazu ausgebildet sein, das Austragen von aufgeschmolzenem Material mittels der Austragsdüse zu ermöglichen und/oder zu verhindern.

Das Ventil kann dazu ausgebildet sein, in der zweiten Position ein dosiertes Zuführen des aufgeschmolzenen Materials durch die erste Dosiereinheit zu der Austragsdüse zu ermöglichen. Das Ventil kann dazu ausgebildet sein, in der zweiten Position ein Zuführen, insbesondere dosiertes Zuführen, des aufgeschmolzenen Materials durch die zweite Dosiereinheit zu der Austragsdüse zu verhindern.

Mittels des Ventils kann daher zwischen einem Laden/Befüllen der Dosiereinheiten und einem Austragen des geschmolzenen Materials umgeschaltet werden.

Die erste Dosiereinheit und die zweite Dosiereinheit weisen jeweils einen Dosierkolben mit einem Antrieb auf. Die zwei Dosierkolben können als Doppelkolben ausgebildet sein. Die Dosierkolben können im Tandembetrieb betrieben werden. Die erste Dosiereinheit und die zweite Dosiereinheit können jeweils einen Zylinder aufweisen, in dem der jeweilige Dosierkolben wirksam angeordnet ist. Die Zylinder können als Aufnahmebehälter für das aufgeschmolzen Material dienen. Der Antrieb kann ein Antrieb mit Spindel und Motor, ein hydraulischer Antrieb, ein pneumatischer Antrieb oder ein elektrischer Antrieb sein. Der Antrieb kann ein Antrieb mit Spindel und Mutter sowie einem Motor sein. Der Motor kann ein Elektromotor, Servomotor oder drehzahlgeregelter Motor sein. Dies erlaubt es das aufgeschmolzene Material in exakter Dosierung aus den Dosiereinheiten auszubringen. Insbesondere können auf diese Weise eine gute Umsetzbarkeit und eine gute Regelbarkeit erreicht werden. Die Dosiereinheiten können auch mit anderen hierfür geeigneten elektronischen Antrieben oder auch hydraulischen oder pneumatischen Antrieben zum Ausgeben der Mischkomponenten versehen sein. Die Dosierkolben können mittels einer Steuereinrichtung gesteuert werden. Die Dosierkolben können eine, insbesondere mittels der Steuereinrichtung, geregelte Vorlaufgeschwindigkeit aufweisen. Durch die Regelung des Vorschubs der Dosierkolben kann ein exakter Volumenstrom mit wenig Kompressionsvolumen erreicht werden. Zusätzlich oder alternativ kann auch die Aufwärtsbewegung der Dosierkolben geregelt werden. Dadurch kann ein konstanter Ladedruck oder Befüllungsdruck und damit eine stabile Schmelzequalität, insbesondere am Extruderende, sichergestellt werden.

Die Dosiereinrichtung kann zumindest teilweise in der Austragsdüse integriert sein. Die Dosiereinrichtung kann vollständig in der Austragsdüse integriert sein. Die erste und/oder zweite Dosiereinheit kann zumindest teilweise in der Austragsdüse integriert und/oder darin angeordnet sein. Die erste und/oder zweite Dosiereinheit kann vollständig in der Austragsdüse integriert und/oder darin angeordnet sein. Das Ventil kann zumindest teilweise in der Austragsdüse integriert und/oder darin angeordnet sein. Das Ventil kann vollständig in der Austragsdüse integriert und/oder darin angeordnet sein.

Die Austragsdüse kann selbst mittels einem 3D-Druckverfahren bzw. additiven Herstellungsverfahren hergestellt sein. Die Austragsdüse kann aus Kunststoff oder Metall hergestellt sein.

Die Austragsdüse kann einen ersten Kanal zum Zuleiten des geschmolzenen Materials von der ersten Dosiereinheit zu dem Auslasskanal aufweisen. Die Austragsdüse kann einen zweiten Kanal zum Zuleiten des geschmolzenen Materials von der zweiten Dosiereinheit zu dem Auslasskanal aufweisen. Der erste Kanal und/oder der zweite Kanal können, insbesondere austragsseitig, in eine Zuleitung, wie Zuleitungskanal, münden. Die Zuleitung kann, insbesondere austragsseitig, in den Auslasskanal münden. Der erste Kanal und/oder der zweite Kanal können gerade und/oder gebogen durch die Austragsdüse verlaufen.

Das Ventil kann dazu ausgebildet sein, in der ersten Position die Zuleitung zwischen dem ersten Kanal und dem Auslasskanal zu unterbrechen. Das Ventil kann dazu ausgebildet sein, in der ersten Position die Zuleitung zwischen dem zweiten Kanal und dem Auslasskanal zu öffnen.

Das Ventil kann dazu ausgebildet sein, in der zweiten Position die Zuleitung zwischen dem zweiten Kanal und dem Auslasskanal zu unterbrechen. Das Ventil kann dazu ausgebildet sein, in der zweiten Position die Zuleitung zwischen dem ersten Kanal und dem Auslasskanal zu öffnen.

Zum Öffnen und Schließen des ersten bzw. zweiten Kanals kann das Ventil ein erstes Ventilelement, wie ein Ventilstößel oder Ventilzapfen, aufweisen. Der Ventilzapfen kann einen Zapfen aufweisen, der den ersten bzw. zweiten Kanal, insbesondere im Querschnitt, verschließen kann. Das erste Ventilelement und/oder der Zapfen kann als Umlenkelement zum Umlenken des aufgeschmolzenen Materials in den Auslasskanal dienen oder ausgebildet sein. Das erste Ventilelement kann drehbar sein.

Die Austragsdüse kann einen dritten Kanal zum Zuleiten des geschmolzenen Materials von dem Einlasskanal zu der ersten Dosiereinheit aufweisen. Die Austragsdüse kann einen vierten Kanal zum Zuleiten des geschmolzenen Materials von dem Einlasskanal zu der zweiten Dosiereinheit aufweisen. Der dritte Kanal und/oder der vierte Kanal können, insbesondere eingangsseitig, in den Einlasskanal münden. Der erste und der dritte Kanal können miteinander verbunden sein und/oder in die erste Dosiereinheit, insbesondere in den Zylinder der ersten Dosiereinheit, münden. Der zweite und der vierte Kanal können miteinander verbunden sein und/oder in die zweite Dosiereinheit, insbesondere in den Zylinder der zweiten Dosiereinheit, münden. An der jeweiligen Verbindungsstelle kann die erste bzw. zweite Dosiereinheit wirksam angeordnet sein.

Das Ventil kann dazu ausgebildet sein, in der ersten Position die Zuleitung zwischen dem Einlasskanal und dem dritten Kanal zu öffnen. Das Ventil kann dazu ausgebildet sein, in der ersten Position die Zuleitung zwischen dem Einlasskanal und dem vierten Kanal zu unterbrechen.

Das Ventil kann dazu ausgebildet sein, in der zweiten Position die Zuleitung zwischen dem Einlasskanal und dem vierten Kanal zu öffnen. Das Ventil kann dazu ausgebildet sein, in der zweiten Position die Zuleitung zwischen dem Einlasskanal und dem dritten Kanal zu unterbrechen.

Zum Öffnen und Schließen des dritten bzw. vierten Kanals kann das Ventil ein zweites Ventilelement, wie ein Ventilzylinder, Ventilstößel oder Ventilzapfen, aufweisen. Das zweite Ventilelement kann ein oder mehrere Bohrungen oder Ausnehmungen aufweisen. Das zweite Ventilelement kann als Umlenkelement zum Umlenken des aufgeschmolzenen Materials in den dritten bzw. vierten Kanal dienen oder ausgebildet sein. Das zweite Ventilelement kann drehbar sein.

Die Austragsdüse kann an dem Gehäuse auswechselbar angeordnet sein. Die Austragsdüse kann als austauschbarer Einsatz ausgebildet sein. Die Austragsdüse kann mit dem Gehäuse lösbar verbunden sein. Die Austragsdüse kann mit dem Gehäuse verschraubt oder verklemmt oder daran an- oder aufgesteckt sein.

Die Vorrichtung und/oder die Austragsdüse kann eine Heizeinrichtung und/oder eine Kühleinrichtung zum Temperieren des aufgeschmolzenen Materials aufweisen.

Die Extrusionsvorrichtung kann ein Extruder, ein Schneckenextruder, ein Einschneckenextruder, ein Zweischneckenextruder, ein Mehrschneckenextruder, ein gleich- oder gegenläufiger Doppelschneckenextruder, ein Compounder oder ein Spritzgießcompounder sein. Die Extrusionsvorrichtung kann wenigstens eine Extruderschnecke aufweisen. Die wenigstens eine Extruderschnecke kann Schneckenelemente oder Schneckenabschnitte zum Fördern, Mischen und/oder Plastifizieren/Aufschmelzen des Materials aufweisen.

Die Druckvorrichtung kann die Fläche, wie Arbeitsfläche oder Bauplattform, aufweisen. Die Fläche kann im Wesentlichen horizontal angeordnet sein.

Die Extrusionsvorrichtung kann einen Einlass und einen Auslass aufweisen. Die wenigstens eine Extruderschnecke kann dazu ausgebildet sein, dass Material von dem Einlass zu dem Auslass zu fördern. Der Einlass kann trichterförmig oder ein Trichter sein. Der Auslass kann düsenartig ausgebildet sein. Der Auslass kann ein Auslasskanal sein. Der Auslass kann ein Extrusionswerkzeug oder eine Extrusionsform sein. Der Auslass kann mit der Vorrichtung zum Auftragen des aufgeschmolzenen Materials auf die Fläche verbunden sein oder dazu ausgebildet sein, mit dieser verbunden zu werden. Die Vorrichtung/Druckkopf kann direkt, d.h. ohne Zwischenstück, mit dem Auslass der Extrusionsvorrichtung verbunden sein. Der Einlasskanal der Vorrichtung/Druckkopf kann direkt mit dem Auslass der Extrusionsvorrichtung verbunden sein. Der Auslass der Extrusionsvorrichtung kann in den Einlasskanal münden.

Die Druckvorrichtung kann ein Schlauchelement zum Zuleiten des aufgeschmolzenen Materials von dem Auslass der Extrusionsvorrichtung zu dem Einlass des 3D-Druckkopfs aufweisen. Das Schlauchelement kann als flexibler oder elastischer Schlauch ausgebildet sein. Das Schlauchelement kann aus Kunststoff, beispielsweise Polytetrafluorethylen, wie Teflon, hergestellt sein. Das Schlauchelement kann mit seinem einen Ende mit dem Auslass, insbesondere dem Auslasskanal, der Extrusionsvorrichtung und mit seinem anderen Ende mit dem Einlass, insbesondere mit dem Einlasskanal des 3D-Druckkopfs zum Auftragen des aufgeschmolzenen Materials auf die Fläche verbunden sein. Das Schlauchelement kann eine Heizeinrichtung zum Temperieren des aufgeschmolzenen Materials aufweisen. Die Heizeinrichtung kann eine oder mehrere Heizmanschetten aufweisen. Die Heizeinrichtung kann das Schlauchelement zumindest abschnittsweise umschließen und/oder an dem Schlauchelement befestigt sein. Die Heizeinrichtung kann flexibel oder elastisch ausgebildet sein.

Am Auslass der Extrusionsvorrichtung und/oder am Einlass des 3D-Druckkopfs zum Auftragen des aufgeschmolzenen Materials auf die Fläche kann ein Druckaufnehmer wirksam angeordnet sein. Der Druckaufnehmer kann zum Erfassen des Schmelzedrucks dienen oder dazu ausgebildet sein.

Die Druckvorrichtung kann eine Bewegungsvorrichtung aufweisen. Die Bewegungsvorrichtung kann eine zwei- oder dreidimensional verfahrbare Kinematik, wie ein 3-Achssystem, aufweisen. Die Bewegungsvorrichtung kann einen Roboterarm oder Roboter, wie Industrieroboter, aufweisen. Der Roboter kann drei oder mehr Achsen, beispielsweise sechs oder acht Achsen, aufweisen.

Der 3D-Druckkopf zum Auftragen des aufgeschmolzenen Materials auf die Fläche kann an der Bewegungsvorrichtung angeordnet sein. Dies hat den Vorteil, dass der 3D-Druckkopf flexibel positioniert werden kann und freigeformte Bauteile einfach hergestellt werden können. Die Extrusionsvorrichtung kann feststehend ausgebildet sein. D.h., die Extrusionsvorrichtung kann während des Betriebs an einem Standort fest platziert sein. Alternativ kann die Extrusionsvorrichtung an der Bewegungsvorrichtung angeordnet sein. Mittels der Bewegungsvorrichtung kann der 3D-Druckkopf und/oder die Extrusionsvorrichtung über die Fläche und/oder das Bauteil geführt werden.

Die Druckvorrichtung kann zum Herstellen von großvolumigen bzw. großen Bauteilen dienen.

Ein weiterer Aspekt betrifft die Verwendung der vorstehend und/oder nachfolgend beschriebenen Vorrichtung zum Auftragen des aufgeschmolzenen Materials auf die Fläche bzw. des Druckkopfs in einem 3D-Druckverfahren bzw. additiven Fertigungsverfahren.

Ein weiterer Aspekt betrifft die Verwendung der vorstehend und/oder nachfolgend beschriebenen Druckvorrichtung in einem 3D-Druckverfahren bzw. additiven Fertigungsverfahren.

Ein weiterer Aspekt betrifft ein Verfahren zum Auftragen eines Materials, insbesondere in einem 3D-Druckverfahren oder additiven Herstellungsverfahren, wie beispielsweise das Fused-Deposition-Modelling-Verfahren, wobei das Material aus einer Extrusionsvorrichtung einer Vorrichtung zum Auftragen des aufgeschmolzenen Materials, wie ein Druckkopf, zugeführt und mittels der Vorrichtung auf eine Fläche, wie Arbeitsfläche, aufgebracht wird. Das Verfahren kann den Schritt umfassen: Befüllen einer ersten Dosiereinheit mit aufgeschmolzenem Material und dosiertes Ausgeben des aufgeschmolzenen Materials aus einer zweiten Dosiereinheit. Das Verfahren kann den Schritt umfassen: Auftragen des dosiert ausgegebenen aufgeschmolzenen Materials auf die Fläche.

Zusammenfassend und mit anderen Worten dargestellt ergibt sich somit durch die Erfindung unter anderem eine Vorrichtung zum Auftragen eines aufgeschmolzenen Materials auf eine Fläche, wie ein Druckkopf, und eine Druckvorrichtung, wie ein Aufbau für einen 3D-Drucker. Mit dem Druckkopf und/oder der Druckvorrichtung können insbesondere großvolumige Teile hergestellt werden. Ein feststehender Extruder kann mit einem beheizten Schlauch gekoppelt sein. Der Schlauch kann mit dem Druckkopf gekoppelt sein. Der Druckkopf kann eine Düse, wie Austragsdüse, aufweisen. Die Düse kann einen definierten Durchmesser aufweisen. Die Düse kann als tauschbarer Einsatz ausgeführt sein. Der Extruder kann Schmelze, wie Kunststoffschmelze, über den beheizten Schlauch zu dem Druckkopf fördern. Der Druckkopf kann zwei Dosierkolben, beispielsweise ein Doppelkolben im Tandembetrieb, bzw. zwei Dosiereinheiten aufweisen. Ein Dosierkolben kann zur genauen Dosierung der Schmelze, beispielsweise des Schmelzefadens, dienen. Der zweite Dosierkolben bzw. Dosiereinheit kann währenddessen mit Schmelze geladen bzw. befüllt werden. Der Druckkopf kann ein Umschaltventil aufweisen. Über das Umschaltventil kann zwischen beiden Funktionen "Laden" und "Dosieren" der Dosierkolben bzw. Dosiereinheiten geschalten werden. Das Umschaltventil kann ein zentrales Umschaltventil sein. Über das zentrale Umschaltventil kann somit zwischen dem Laden/Befüllen eines Dosierkolbens bzw. Dosiereinheit und dem Austragen der Schmelze umgeschaltet werden. Sollte ein Dosierkolben bzw. Dosiereinheit früher geladen bzw. befüllt sein, kann der Extruder abgeschaltet werden. Über eine genau geregelte Vorlaufgeschwindigkeit des Dosierkolbens kann ein sehr sauberer bzw. genauer Volumenstrom mit wenig Kompressionsvolumen durch die Regelung des Vorschubs des Dosierkolbens durch die Austragsdüse sichergestellt werden. Der Dosierkolben kann über einen drehzahlgeregelten Motor mit Spindel betrieben werden. Im Rahmen der Bahnsteuerung kann der Volumenstrom somit einfach und dynamisch angepasst werden. Über eine Aufwärtsbewegung des Dosierkolbens kann ein konstanter Ladedruck bzw. Befüllungsdruck und damit eine stabile Schmelzequalität am Extruderende sichergestellt werden. Am Ende des Extruders kann ein Druckaufnehmer angebracht sein. Ist ein Dosierkolben bzw. Dosiereinheit gefüllt kann der Extruder zumindest zeitweise abgeschaltet werden. Bevorzugt kann der Extruder kontinuierlich betrieben werden. Insbesondere bei sehr großen Bauteilen kann der Extruder auch auf groben Bewegungen mitgeführt werden. Der Extruder kann an einer Bewegungsvorrichtung, wie ein Roboter bzw. Industrieroboter, angeordnet sein.

Mit der Erfindung können große bzw. großvolumigere Bauteile einfach hergestellt bzw. mittels einem 3D-Druckverfahren oder additiven Fertigungsverfahren hergestellt werden. Insbesondere ist es möglich, größere Volumenströme bei stabiler Schmelzequalität auszutragen. Ferner kann eine hohe Druckgenauigkeit bei flexibler Schmelzestromsteuerung sichergestellt werden. Ein genauerer Schmelzeaustrag wird ermöglicht. Eine schnelle Regelbarkeit des Durchsatzes über die Extruderdrehzahl kann bereitgestellt werden. Der Einfluss des Austragsdüsendurchmessers auf den Förderdruck wir verhindert oder stark reduziert. Kompressionseffekte werden vermieden oder zumindest reduziert. Ferner wird ein geringeres Gewicht bewegt, dass zu einer höheren Genauigkeit führt.

Im Bedarfsfälle kann an die Austragsdüse zusätzlich eine 3D-Druckdüse angebracht werden, falls für den 3D-Druck ein Schmelzestrang mit einer anderen Geometrie, insbesondere einem anderen Querschnitt, gewünscht ist. In einem solchen Fall kann an der Austragsdüse eine 3D-Druckdüse mit einem bestimmten Querschnitt der Austrittsöffnung dieser 3D-Druckdüse befestigt werden. Beispielsweise könnte die Austrittsöffnung der 3D-Druckdüse einen rechteckförmigen oder einen polygonartigen Querschnitt besitzen. Im Ergebnis kann aufgeschmolzenes Kunststoffmaterial aus der Austragsdüse in die 3D-Druckdüse geleitet und ein Schmelzestrang mit einem der Austrittsöffnung entsprechenden Querschnitt aus der 3D-Druckdüse ausgetragen werden.

Nachfolgend werden Ausführungsbeispiele der Erfindung unter Bezugnahme auf Figuren näher beschrieben, dabei zeigen schematisch und beispielhaft:
- Fig. 1: eine Vorderansicht eines 3D-Druckkopfs;
- Fig. 2: eine perspektivische Seitenansicht des 3D-Druckkopfs gemäß Fig. 1;
- Fig. 3: eine Variante einer Druckvorrichtung mit einem 3D-Druckkopf gemäß Fig. 1; und
- Fig. 4: eine weitere Variante einer Druckvorrichtung mit einem 3D-Druckkopf gemäß Fig. 1.

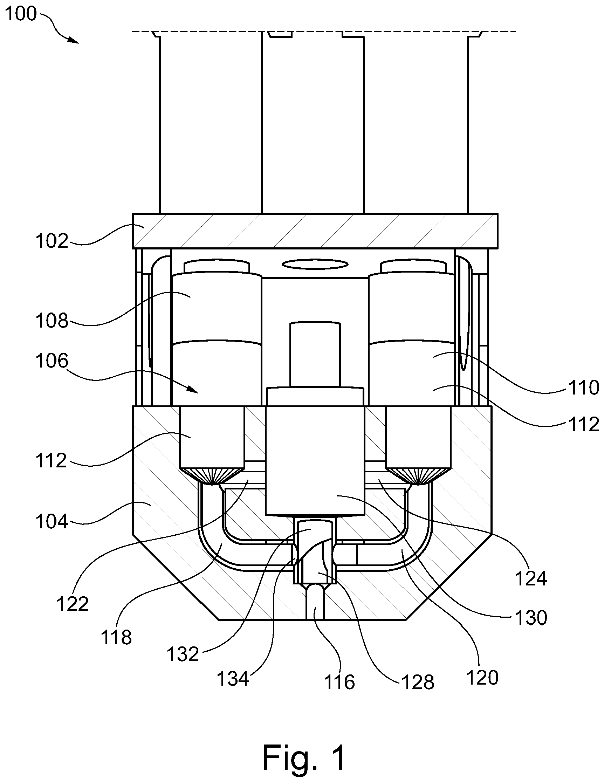

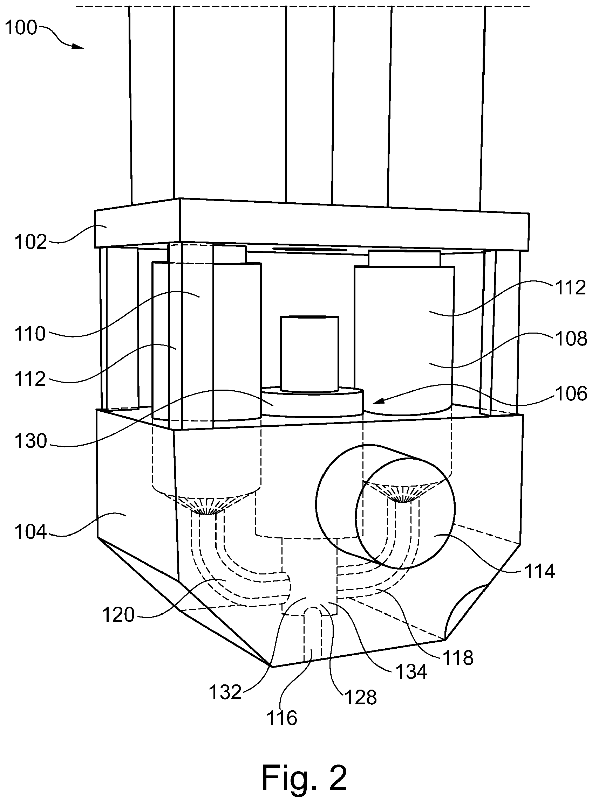

Fig. 1 und 2 zeigen eine Vorrichtung 100 zum Auftragen eines aufgeschmolzenen Kunststoffmaterials auf eine Fläche. Die Vorrichtung 100 ist als 3D-Druckkopf 100 ausgebildet. Der 3D-Druckkopf 100 weist ein Gehäuse 102 und eine an dem Gehäuse lösbar befestigte Austragsdüse 104 auf. Die Austragsdüse 104 ist als tauschbarer Einsatz ausgebildet. Der 3D-Druckkopf 100 weist eine Dosiereinrichtung 106 mit einer ersten Dosiereinheit 108 und einer zweiten Dosiereinheit 110, die jeweils zum Aufnehmen und dosierten Abgeben des aufgeschmolzenen Kunststoffmaterials ausgebildet sind. Die Dosiereinrichtung 106 ist teilweise in der Austragsdüse 106 integriert. Die Dosiereinrichtung 106 ist so ausgebildet, dass das aufgeschmolzene Kunststoffmaterial abwechselnd oder im fliegenden Wechsel durch die erste Dosiereinheit 108 und die zweite Dosiereinheit 110 der Austragsdüse 104 zugeführt werden kann. Die erste Dosiereinheit 108 und die zweite Dosiereinheit 110 weisen jeweils einen Dosierkolben 112 mit einem Antrieb auf.

Wie in Fign. 1 und 2 zu erkennen ist, weist die Austragsdüse 104 einen Einlasskanal 114 zum Einleiten des aufgeschmolzenen Kunststoffmaterials und einen Auslasskanal 116 auf.

Die Austragsdüse 104 weist einen ersten Kanal 118 zum Zuleiten des geschmolzenen Kunststoffmaterials von der ersten Dosiereinheit 108 zu dem Auslasskanal 116 und einen zweiten Kanal 120 zum Zuleiten des geschmolzenen Kunststoffmaterials von der zweiten Dosiereinheit 110 zu dem Auslasskanal 116 auf. Die Austragsdüse 104 weist ferner einen dritten Kanal 122 zum Zuleiten des geschmolzenen Kunststoffmaterials von dem Einlasskanal 114 zu der ersten Dosiereinheit 108 und einen vierten Kanal 124 zum Zuleiten des geschmolzenen Kunststoffmaterials von dem Einlasskanal 114 zu der zweiten Dosiereinheit 110 auf. Der erste Kanal 118 und der zweite Kanal 120 münden in einen Zuleitungskanal 128, der in den Auslasskanal 116 der Austragsdüse 104 mündet. Der Einlasskanal 114 mündet in den dritten Kanal 122 und in den vierten Kanal 124.

Die Dosiereinrichtung 106 weist ein Umschaltventil 130 zum Umschalten zwischen der ersten Dosiereinheit 108 und der zweiten Dosiereinheit 110 und zwischen einer ersten Position und einer zweiten Position auf. Das Umschaltventil 130 ist dazu ausgebildet, in der ersten Position einen Eintritt des aufgeschmolzenen Kunststoffmaterials in die erste Dosiereinheit 108 zu ermöglichen und einen Eintritt des aufgeschmolzenen Kunststoffmaterials in die zweite Dosiereinheit 110 zu verhindern sowie gleichzeitig ein dosiertes Zuführen des aufgeschmolzenen Kunststoffmaterials durch die zweite Dosiereinheit 110 zu der Austragsdüse 104 zu ermöglichen und ein Zuführen durch die erste Dosiereinheit 108 zu verhindern. Ferner ist das Umschaltventil 130 dazu ausgebildet, in der zweiten Position einen Eintritt des aufgeschmolzenen Kunststoffmaterials in die zweite Dosiereinheit 110 zu ermöglichen und einen Eintritt des aufgeschmolzenen Kunststoffmaterials in die erste Dosiereinheit 108 zu verhindern sowie gleichzeitig ein dosiertes Zuführen des aufgeschmolzenen Kunststoffmaterials durch die erste Dosiereinheit 108 zu der Austragsdüse 104 zu ermöglichen und ein Zuführen durch die zweite Dosiereinheit 110 zu verhindern.

Zum Öffnen und Schließen des ersten Kanals 118 bzw. des zweiten Kanals 120 weist das Umschaltventil 130 ein als Ventilzapfen ausgebildetes erstes Ventilelement 132 auf. Der Ventilzapfen 132 ist in dem Zuleitungskanal 128 wirksam angeordnet und weist einen Zapfen 134 auf, der den ersten bzw. zweiten Kanal 118, 120 im Querschnitt verschließen kann. Der Ventilzapfen 132 ist ferner als Umlenkelement zum Umlenken des aufgeschmolzenen Kunststoffmaterials in den Auslasskanal 116 ausgebildet.

Zum Öffnen und Schließen des dritten Kanals 122 bzw. des vierten Kanals 124 weist das Umschaltventil 130 ein zweites Ventilelement 136 auf, das als Umlenkelement zum Umlenken des aufgeschmolzenen Kunststoffmaterials von dem Einlasskanal 114 in den dritten bzw. vierten Kanal 122, 124 ausgebildet ist. Das zweite Ventilelement 136 ist zwischen dem Einlasskanal 114 und dem dritten und vierten Kanal 122, 124 wirksam angeordnet.

Das Umschaltventil 130 ist dazu ausgebildet, in der ersten Position die Zuleitung zwischen dem ersten Kanal 118 und dem Auslasskanal 116 zu unterbrechen und die Zuleitung zwischen dem zweiten Kanal 120 und dem Auslasskanal 116 zu öffnen (vgl. Fign. 1 und 2) sowie gleichzeitig die Zuleitung zwischen dem Einlasskanal 114 und dem dritten Kanal 122 zu öffnen und die Zuleitung zwischen dem Einlasskanal 114 und dem vierten Kanal 124 zu unterbrechen.

Ferner ist das Umschaltventil 130 dazu ausgebildet, in der zweiten Position die Zuleitung zwischen dem zweiten Kanal 120 und dem Auslasskanal 116 zu unterbrechen und die Zuleitung zwischen dem ersten Kanal 118 und dem Auslasskanal 116 zu öffnen sowie gleichzeitig die Zuleitung zwischen dem Einlasskanal 114 und dem vierten Kanal 124 zu öffnen und die Zuleitung zwischen dem Einlasskanal 114 und dem dritten Kanal 122 zu unterbrechen.

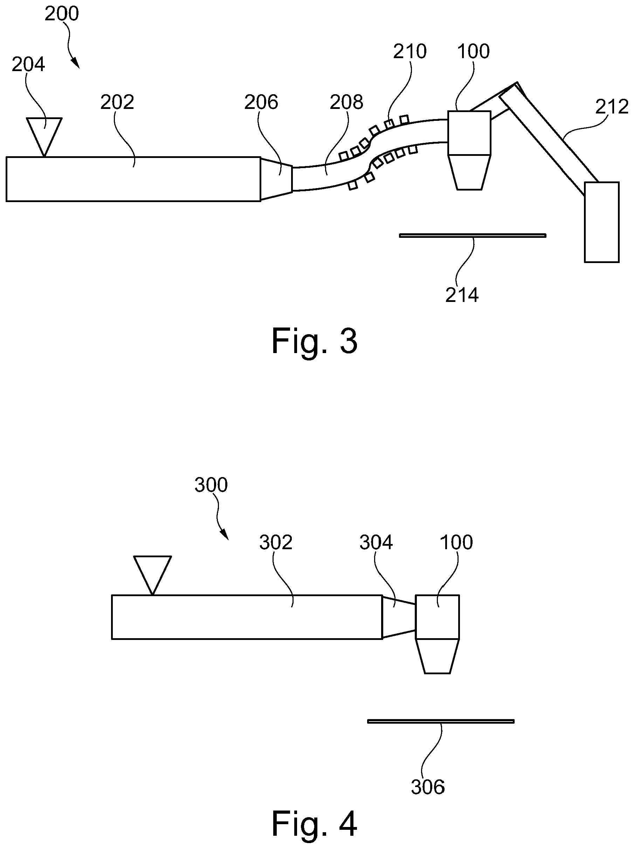

Fig. 3 zeigt eine Variante einer Druckvorrichtung 200 mit einem 3D-Druckkopf 100 gemäß Fig. 1. Die Druckvorrichtung 200 ist als 3D-Druckvorrichtung 200 ausgebildet. Die Druckvorrichtung 200 weist eine als Extruder 202 ausgebildete Extrusionsvorrichtung 202 zum Aufschmelzen von Kunststoffmaterial auf. Der Extruder 202 ist feststehend ausgebildet, so dass dieser während des Betriebs an seinem Aufstellungsort verbleibt.

Der Extruder 202 weist einen Einlasstrichter 204 zum Zuführen von granulatförmigen Kunststoffmaterial, eine Extruderschnecke zum Plastifizieren des Kunststoffmaterials und einen Extruderauslass 206 auf. Die Extruderschnecke plastifiziert das Kunststoffmaterial und fördert das Kunststoffmaterial vom Einlasstrichter 204 zum Extruderauslass 206.

An dem Extruderauslass 206 ist ein flexibler beheizter Schlauch 208 befestigt, durch den das extrudierte aufgeschmolzene Kunststoffmaterial gedrückt wird. Um dem Schlauch 208 herum ist eine Heizeinrichtung 210 zum Temperieren des innerhalb des Schlauches 208 fließenden aufgeschmolzenen Kunststoffmaterials angeordnet.

Der Schlauch 208 ist mit seinem anderen Ende mit dem Einlasskanal 114 des 3D-Druckkopfs 100 verbunden. Das aufgeschmolzene Kunststoffmaterial kann so dem 3D-Druckkopf 100 zugeführt werden. Der 3D-Druckkopf 100 ist an einer als Roboter 212 ausgebildeten Bewegungseinrichtung 212 befestigt. Mittels dem Roboter 212 kann die Austragsdüse 104 über eine feststehende Arbeitsfläche 214 frei bewegt werden, um auf dieser aufgeschmolzene Kunststoffstränge abzulegen und ein 3D-gedrucktes Bauteil zu fertigen.

Im Übrigen wird ergänzend insbesondere auf Fign. 1 und 2 und die zugehörige Beschreibung verwiesen.

Fig. 4 zeigt eine weitere Variante einer Druckvorrichtung 300 mit einem 3D-Druckkopf 100 gemäß Fig. 1. Im Unterschied zu der Variante gemäß Fig. 3, ist hier der 3D-Druckkopf 100 direkt an einem Extruder 302 angeordnet. Ein Extruderauslass 304 ist damit direkt mit dem Einlasskanal 114 des 3D-Druckkopfs 100 verbunden.

Der Extruder 306 kann hier ebenfalls an seinem Aufstellungsort feststehend ausgebildet sein. Der 3D-Druckkopf 100 ist damit ebenfalls feststehend. Um nun ein 3D-gedrucktes Bauteil fertigen zu können, weist die Druckvorrichtung 300 eine bewegbare Arbeitsfläche 306 auf. Die Arbeitsfläche 306 kann beispielsweise in einer horizontalen Ebene verfahren werden. Zusätzlich kann die Arbeitsfläche 306 in vertikaler Richtung verfahren werden.

Alternativ kann die Druckvorrichtung 300 eine Bewegungseinrichtung aufweisen, an der sowohl der Extruder 302 als auch der 3D-Druckkopf 100 befestigt sind, um die Austragdüse 116 des 3D-Druckkopfs 100 über eine feststehende Arbeitsfläche 306 zu bewegen.

Im Übrigen wird ergänzend insbesondere auf Fign. 1 bis 3 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

### Bezugszeichenliste

- 100: 3D-Druckkopf
- 102: Gehäuse
- 104: Austragsdüse
- 106: Dosiereinrichtung
- 108: ersten Dosiereinheit
- 110: zweite Dosiereinheit
- 112: Dosierkolben
- 114: Einlasskanal
- 116: Auslasskanal
- 118: erster Kanal
- 120: zweiter Kanal
- 122: dritter Kanal
- 124: vierter Kanal
- 128: Zuleitungskanal
- 130: Umschaltventil
- 132: erstes Ventilelement
- 134: Ventilzapfen
- 136: zweites Ventilelement

- 200: Druckvorrichtung
- 202: Extruder
- 204: Einlasstrichter
- 206: Extruderauslass
- 208: Schlauch
- 210: Heizeinrichtung
- 212: Roboter
- 214: Arbeitsfläche

- 300: Druckvorrichtung
- 302: Extruder
- 304: Extruderauslass
- 306: Arbeitsfläche

## Patentansprüche

1. Druckvorrichtung, insbesondere 3D-Druckvorrichtung (200, 300), wie 3D-Drucker, mit
- einer Extrusionsvorrichtung (202, 302) zum Aufschmelzen eines Materials, wie Kunststoffmaterial, und
- einem 3D-Druckkopf (100) zum Auftragen des von der Extrusionsvorrichtung (202, 302) aufgeschmolzenen Materials auf eine Fläche (214, 306), mit einem Gehäuse (102) und einer an dem Gehäuse (102) angeordneten Austragsdüse (104), umfassend eine Dosiereinrichtung (106) mit einer ersten Dosiereinheit (108) und einer zweiten Dosiereinheit (110), die jeweils zum Aufnehmen und dosierten Abgeben des aufgeschmolzenen Materials ausgebildet sind, wobei die Dosiereinrichtung (106) ausgebildet ist, das aufgeschmolzene Material abwechselnd oder im fliegenden Wechsel durch die erste Dosiereinheit (108) und die zweite Dosiereinheit (110) einem Auslasskanal (116) der Austragsdüse (104) zuzuführen, **dadurch gekennzeichnet** die erste Dosiereinheit (108) und die zweite Dosiereinheit (110) jeweils einen Dosierkolben (112) mit einem Antrieb aufweist.

2. Druckvorrichtung nach Anspruch 1, **dadurch gekennzeichnet, dass** der 3D-Druckkopf (100) und/oder die Austragsdüse (104) einen Einlasskanal (114) zum Einleiten des durch die Extrusionsvorrichtung (202, 302), aufgeschmolzenen Materials aufweist.

3. Druckvorrichtung nach wenigstens einem der vorhergehenden Ansprüche, **dadurch gekennzeichnet, dass** die Dosiereinrichtung (106) ein Ventil (130), wie Umschaltventil, zum Umschalten zwischen der ersten Dosiereinheit (108) und der zweiten Dosiereinheit (110) und/oder zwischen einer ersten Position und einer zweiten Position aufweist.

4. Druckvorrichtung nach Anspruch 3, **dadurch gekennzeichnet, dass** das Ventil (130) dazu ausgebildet ist, in der ersten Position einen Eintritt des aufgeschmolzenen Materials in die erste Dosiereinheit (108) zu ermöglichen und einen Eintritt des aufgeschmolzenen Materials in die zweite Dosiereinheit (110) zu verhindern.

5. Druckvorrichtung nach Anspruch 3 oder 4, **dadurch gekennzeichnet, dass** das Ventil (130) dazu ausgebildet ist, in der zweiten Position einen Eintritt des aufgeschmolzenen Materials in die zweite Dosiereinheit (110) zu ermöglichen und einen Eintritt des aufgeschmolzenen Materials in die erste Dosiereinheit (108) zu verhindern.

6. Druckvorrichtung nach wenigstens einem der vorhergehenden Ansprüche 3 bis 5, **dadurch gekennzeichnet, dass** das Ventil (130) dazu ausgebildet ist, in der ersten Position ein dosiertes Zuführen des aufgeschmolzenen Materials durch die zweite Dosiereinheit (110) zu der Austragsdüse (104) zu ermöglichen und ein Zuführen durch die erste Dosiereinheit (108) zu verhindern.

7. Druckvorrichtung nach wenigstens einem der vorhergehenden Ansprüche 3 bis 6, **dadurch gekennzeichnet, dass** das Ventil (130) dazu ausgebildet ist, in der zweiten Position ein dosiertes Zuführen des aufgeschmolzenen Materials durch die erste Dosiereinheit (108) zu der Austragsdüse (104) zu ermöglichen und ein Zuführen durch die zweite Dosiereinheit (110) zu verhindern.

8. Druckvorrichtung nach wenigstens einem der vorhergehenden Ansprüche, **dadurch gekennzeichnet, dass** die Dosiereinrichtung (106) zumindest teilweise in der Austragsdüse (104) integriert ist.

9. Druckvorrichtung nach wenigstens einem der vorhergehenden Ansprüche, **dadurch gekennzeichnet, dass** die Austragsdüse (104) einen ersten Kanal (118) zum Zuleiten des geschmolzenen Materials von der ersten Dosiereinheit (108) zu dem Auslasskanal (116) und/oder einen zweiten Kanal (120) zum Zuleiten des geschmolzenen Materials von der zweiten Dosiereinheit (110) zu dem Auslasskanal (116) aufweist.

10. Druckvorrichtung nach Anspruch 9, **dadurch gekennzeichnet, dass** das Ventil (130) dazu ausgebildet ist, in der ersten Position eine Zuleitung zwischen dem ersten Kanal (118) und dem Auslasskanal (116) zu unterbrechen und die Zuleitung zwischen dem zweiten Kanal (120) und dem Auslasskanal (116) zu öffnen.

11. Druckvorrichtung nach Anspruch 9 oder 10, **dadurch gekennzeichnet, dass** das Ventil (130) dazu ausgebildet ist, in der zweiten Position eine Zuleitung zwischen dem zweiten Kanal (120) und dem Auslasskanal (116) zu unterbrechen und die Zuleitung zwischen dem ersten Kanal (118) und dem Auslasskanal (116) zu öffnen.

12. Druckvorrichtung nach wenigstens einem der vorhergehenden Ansprüche, **dadurch gekennzeichnet, dass** die Austragsdüse (104) einen dritten Kanal (122) zum Zuleiten des geschmolzenen Materials von dem Einlasskanal (114) zu der ersten Dosiereinheit (108) und/oder einen vierten Kanal (124) zum Zuleiten des geschmolzenen Materials von dem Einlasskanal (114) zu der zweiten Dosiereinheit (110) aufweist.

13. Druckvorrichtung nach Anspruch 12, **dadurch gekennzeichnet, dass** das Ventil (130) dazu ausgebildet ist, in der ersten Position eine Zuleitung zwischen dem Einlasskanal (114) und dem dritten Kanal (122) zu öffnen und die Zuleitung zwischen dem Einlasskanal (114) und dem vierten Kanal (124) zu unterbrechen.

14. Druckvorrichtung (100) nach Anspruch 12 oder 13, **dadurch gekennzeichnet, dass** das Ventil (130) dazu ausgebildet ist, in der zweiten Position eine Zuleitung zwischen dem Einlasskanal (114) und dem vierten Kanal (124) zu öffnen und die Zuleitung zwischen dem Einlasskanal (114) und dem dritten Kanal (122) zu unterbrechen.

15. Druckvorrichtung (100) nach wenigstens einem der vorhergehenden Ansprüche, **dadurch gekennzeichnet, dass** die Austragsdüse (104) an dem Gehäuse (102) auswechselbar, insbesondere als austauschbarer Einsatz, angeordnet ist.

16. Druckvorrichtung (300) nach einem der vorstehenden Ansprüche, **dadurch gekennzeichnet, dass** der 3D-Druckkopf (100) direkt mit einem Auslass (304) der Extrusionsvorrichtung (302) verbunden ist.

17. Druckvorrichtung (200) nach einem der vorstehenden Ansprüche, **dadurch gekennzeichnet, dass** die Druckvorrichtung (200) ein Schlauchelement (208) zum Zuleiten des aufgeschmolzenen Materials von einem Auslass (206) der Extrusionsvorrichtung (202) zu einem Einlass (114) des 3D-Druckkopfs (100) aufweist.

18. Druckvorrichtung (200) nach Anspruch 17, **dadurch gekennzeichnet, dass** das Schlauchelement (208) eine Heizeinrichtung (210) zum Temperieren des aufgeschmolzenen Materials aufweist.

19. Druckvorrichtung (200, 300) nach wenigstens einem der vorhergehenden Ansprüche, **dadurch gekennzeichnet, dass** der 3D-Druckkopf (100) an einer Bewegungsvorrichtung (212), wie ein Roboter, angeordnet ist.

20. Druckvorrichtung (200, 300) nach wenigstens einem der vorhergehenden Ansprüche 1 bis 18, **dadurch gekennzeichnet, dass** die Extrusionsvorrichtung (202, 302) feststehend ausgebildet ist oder an der Bewegungsvorrichtung (212), wie ein Roboter, angeordnet ist.

## Claims

1. A printing device, in particular a 3D printing device (200, 300), such as a 3D printer, comprising
- an extrusion device (202, 302) for melting a material, such as plastic material, and
- a 3D printhead (100) for depositing the material melted by the extrusion device (202, 302) onto a surface (214, 306), with a housing (102), and a discharge nozzle (104) arranged on the housing (102), comprising a metering device (106) with a first metering unit (108) and a second metering unit (110), which are designed respectively for the receiving and metered dispensing of the melted material, wherein the metering device (106) is designed to supply the melted material to an outlet channel (116) of the discharge nozzle (104) through the first metering unit (108) and the second metering unit (110) in an alternating manner or on-the-fly, **characterized in that** the first metering unit (108) and the second metering unit (110) respectively has a metering piston (112) with a drive.

2. The printing device according to Claim 1, **characterized in that** the 3D printhead (100) and/or the discharge nozzle (104) has an inlet channel (114) for introducing the material melted by the extrusion device (202, 302).

3. The printing device according to at least one of the preceding claims, **characterized in that** the metering device (106) has a valve (130), such as a switchover valve, for switching over between the first metering unit (108) and the second metering unit (110) and/or between a first position and a second position.

4. The printing device according to Claim 3, **characterized in that** the valve (130) is designed, in the first position, to enable an entry of the melted material into the first metering unit (108) and to prevent an entry of the melted material into the second metering unt (110).

5. The printing device according to Claim 3 or 4, **characterized in that** the valve (130) is designed, in the second position, to enable an entry of the melted material into the second metering unit (110) and to prevent an entry of the melted material into the first metering unit (108).

6. The printing device according to at least one of the preceding Claims 3 to 5, **characterized in that** the valve (130) is designed, in the first position, to enable a metered supplying of the melted material through the second metering unit (110) to the discharge nozzle (104), and to prevent a supplying through the first metering unit (108).

7. The printing device according to at least one of the preceding Claims 3 to 6, **characterized in that** the valve (130) is designed, in the second position, to enable a metered supplying of the melted material through the first metering unit (108) to the discharge nozzle (104), and to prevent a supplying through the second metering unit (110).

8. The printing device according to at least one of the preceding claims, **characterized in that** the metering device (106) is at least partially integrated in the discharge nozzle (104).

9. The printing device according to at least one of the preceding claims, **characterized in that** the discharge nozzle (104) has a first channel (118) for supplying the melted material from the first metering nit (108) to the outlet channel (116) and/or has a second channel (120) for supplying the melted material from the second metering unit (110) to the outlet channel (116) .

10. The printing device according to Claim 9, **characterized in that** the valve (130) is designed, in the first position, to interrupt a supply line between the first channel (118) and the outlet channel (116), and to open the supply line between the second channel (120) and the outlet channel (116).

11. The printing device according to Claim 9 or 10, **characterized in that** the valve (130) is designed, in the second position, to interrupt a supply line between the second channel (120) and the outlet channel (116), and to open the supply line between the first channel (118) and the outlet channel (116).

12. The printing device according to at least one of the preceding claims, **characterized in that** the discharge nozzle (104) has a third channel (122) for supplying the melted material from the inlet channel (114) to the first metering unit (108) and/or a fourth channel (124) for supplying the melted material from the inlet channel (114) to the second metering unit (110).

13. The printing device according to Claim 12, **characterized in that** the valve (130) is designed, in the first position, to open a supply line between the inlet channel (114) and the third channel (122), and to interrupt the supply line between the inlet channel (114) and the fourth channel (124).

14. The printing device (100) according to Claim 12 or 13, **characterized in that** the valve (130) is designed, in the second position, to open a supply line between the inlet channel (114) and the fourth channel (124), and to interrupt the supply line between the inlet channel (114) and the third channel (122).

15. The printing device (100) according to at least one of the preceding claims, **characterized in that** the discharge nozzle (104) is arranged on the housing (102) in an interchangeable manner, in particular as an exchangeable insert.

16. The printing device (300) according to one of the preceding claims, **characterized in that** the 3D printhead (100) is directly connected to an outlet (304) of the extrusion device (302).

17. The printing device (200) according to one of the preceding claims, **characterized in that** the printing device (200) has a hose element (208) for supplying the melted material from an outlet (206) of the extrusion device (202) to an inlet (114) of the 3D printhead (100).

18. The printing device (200) according to Claim 17, **characterized in that** the hose element (208) has a heating arrangement (210) for controlling the temperature of the melted material.

19. The printing device (200, 300) according to at least one of the preceding Claims, **characterized in that** the 3D printhead (100) is arranged on a movement device (212), such as a robot.

20. The printing device (200, 300) according to at least one of the preceding Claims 1 to 18, **characterized in that** the extrusion device (202, 302) is designed so as to be stationary or is arranged on the movement device (212), such as a robot.

## Revendications

1. Dispositif d'impression, en particulier dispositif d'impression 3D (200, 300) comme une imprimante 3D, comprenant :
- un dispositif d'extrusion (202, 302) pour faire fondre une matière, comme de la matière plastique, et
- une tête d'impression 3D (100) pour appliquer la matière fondue sur une surface (214, 306) par le dispositif d'extrusion (202, 302), comprenant un logement (102) et une buse d'application (104) disposée sur le logement (102), comprenant un dispositif de dosage (106) avec une première unité doseuse (108) et une seconde unité doseuse (110) qui sont conçues respectivement pour recevoir et restituer la matière fondue de manière dosée, dans lequel le dispositif de dosage (106) est conçu pour amener la matière fondue par alternance ou en échange volant à travers la première unité doseuse (108) et la seconde unité doseuse (110) à un canal de sortie (116) de la buse d'application (104), **caractérisé en ce que** la première unité doseuse (108) et la seconde unité doseuse (110) présentent respectivement un piston de dosage (112) avec un entraînement.

2. Dispositif d'impression selon la revendication 1, **caractérisé en ce que** la tête d'impression 3D (100) et/ou la buse d'application (104) présente(nt) un canal d'entrée (114) pour introduire la matière fondue à travers le dispositif d'extrusion (202, 302).

3. Dispositif d'impression selon au moins l'une des revendications précédentes, **caractérisé en ce que** le dispositif de dosage (106) présente une soupape (130), comme une soupape d'inversion, pour inverser entre la première unité doseuse (108) et la seconde unité doseuse (110) et/ou entre une première position et une seconde position.

4. Dispositif d'impression selon la revendication 3, **caractérisé en ce que** la soupape (130) est conçue pour, dans la première position, permettre une entrée de la matière fondue dans la première unité doseuse (108) et empêcher une entrée de la matière fondue dans la seconde unité doseuse (110).

5. Dispositif d'impression selon la revendication 3 ou 4, **caractérisé en ce que** la soupape (130) est conçue pour, dans la deuxième position, permettre une entrée de la matière fondue dans la seconde unité doseuse (110) et empêcher une entrée de la matière fondue dans la première unité doseuse (108).

6. Dispositif d'impression selon l'une des revendications 3 à 5, **caractérisé en ce que** la soupape (130) est conçue pour, dans la première position, permettre une alimentation dosée de la matière fondue à travers la seconde unité doseuse (110) vers la buse d'application (104) et empêcher une alimentation à travers la première unité doseuse (108).

7. Dispositif d'impression selon l'une des revendications 3 à 6, **caractérisé en ce que** la soupape (130) est conçue pour, dans la seconde position, permettre une alimentation dosée de la matière fondue à travers la première unité doseuse (108) vers la buse d'application (104) et empêcher une alimentation à travers la seconde unité doseuse (110).

8. Dispositif d'impression selon au moins l'une des revendications précédentes, **caractérisé en ce que** le dispositif de dosage (106) est intégré au moins partiellement dans la buse d'application (104).

9. Dispositif d'impression selon au moins l'une des revendications précédentes, **caractérisé en ce que** la buse d'application (104) présente un premier canal (118) pour alimenter la matière fondue de la première unité doseuse (108) vers le canal de sortie (116) et/ou un deuxième canal (120) pour alimenter la matière fondue de la seconde unité doseuse (110) vers le canal de sortie (116).

10. Dispositif d'impression selon la revendication 9, **caractérisé en ce que** la soupape (130) est conçue pour, dans la première position, interrompre une alimentation entre le premier canal (118) et le canal de sortie (116) et ouvrir l'alimentation entre le deuxième canal (120) et le canal de sortie (116).

11. Dispositif d'impression selon la revendication 9 ou 10, **caractérisé en ce que** la soupape (130) est conçue pour, dans la seconde position, interrompre une alimentation entre le deuxième canal (120) et le canal de sortie (116) et ouvrir l'alimentation entre le premier canal (118) et le canal de sortie (116).

12. Dispositif d'impression selon au moins l'une des revendications précédentes, **caractérisé en ce que** la buse d'application (104) présente un troisième canal (122) pour alimenter la matière fondue du canal d'entrée (114) vers la première unité doseuse (108) et/ou un quatrième canal (124) pour alimenter la matière fondue du canal d'entrée (114) vers la seconde unité doseuse (110) .

13. Dispositif d'impression selon la revendication 12, **caractérisé en ce que** la soupape (130) est conçue pour, dans la première position, ouvrir une alimentation entre le canal d'entrée (114) et le troisième canal (122) et interrompre l'alimentation entre le canal d'entrée (114) et le quatrième canal (124).

14. Dispositif d'impression (100) selon la revendication 12 ou 13, **caractérisé en ce que** la soupape (130) est conçue pour, dans la deuxième position, ouvrir une alimentation entre le canal d'entrée (114) et le quatrième canal (124) et interrompre l'alimentation entre le canal d'entrée (114) et le troisième canal (122) .

15. Dispositif d'impression (100) selon au moins l'une des revendications précédentes, **caractérisé en ce que** la buse d'application (104) est disposée sur le logement (102) en étant remplaçable, en particulier comme insert pouvant être changé.

16. Dispositif d'impression (300) selon l'une des revendications précédentes, **caractérisé en ce que** la tête d'impression 3D (100) est reliée directement à une sortie (304) du dispositif d'extrusion (302).

17. Dispositif d'impression (200) selon l'une des revendications précédentes, **caractérisé en ce que** le dispositif d'impression (200) présente un élément de tuyau (208) pour alimenter la matière fondue d'une sortie (206) du dispositif d'extrusion (202) vers une entrée (114) de la tête d'impression 3D (100).

18. Dispositif d'impression (200) selon la revendication 17, **caractérisé en ce que** l'élément de tuyau (208) présente un dispositif de chauffage (210) pour chambrer la matière fondue.

19. Dispositif d'impression (200, 300) selon au moins l'une des revendications précédentes, **caractérisé en ce que** la tête d'impression 3D (100) est disposée sur un dispositif de mouvement (212), comme un robot.

20. Dispositif d'impression (200, 300) selon au moins l'une des revendications précédentes 1 à 18, **caractérisé en ce que** le dispositif d'extrusion (202, 302) est conçu fixe ou est disposé sur le dispositif de mouvement (212), comme un robot.
